Europäisches Patentamt

European Patent Office

Office européen des brevets

(11)  EP 1 542 030 A1

(19)

(12)  # DEMANDE DE BREVET EUROPEEN

(43) Date de publication:
**15.06.2005  Bulletin 2005/24**

(51) Int Cl.7: **G01S 3/80**, G01S 3/74

(21) Numéro de dépôt: **03356199.4**

(22) Date de dépôt: **11.12.2003**

(84) Etats contractants désignés:
**AT BE BG CH CY CZ DE DK EE ES FI FR GB GR
HU IE IT LI LU MC NL PT RO SE SI SK TR**
Etats d'extension désignés:
**AL LT LV MK**

(71) Demandeur: **01 dB - Metravib
69760 Limonest (FR)**

(72) Inventeurs:
• **Permuy, Alfred
92500 Rueil Malmaison (FR)**

• **Millet, Joel
38390 Montalieu-Vercieu (FR)**

(74) Mandataire: **Thibault, Jean-Marc et al
Cabinet Beau de Loménie
51, Avenue Jean Jaurès
B.P. 7073
69301 Lyon Cédex 07 (FR)**

(54)  **Procédé et dispositif de détection et de localisation de sources de bruit non corrélées**

(57)  Selon l'invention le procédé de détection et de localisation de sources de bruit, émettant chacune respectivement des signaux ($S_j$) avec $j$=1 à M, la détection étant assurée à l'aide de capteurs délivrant chacun, respectivement, un signal électrique temporel ($s_i$) avec $i$ variant de 1 à N consiste à prélever les signaux électriques temporels délivrés par les capteurs, chaque signal $s_i(t)$ délivré par un capteur étant la somme des signaux ($S_j$) émis par les sources de bruit, à amplifier et à filtrer les signaux électriques temporels prélevés, à numériser les signaux électriques, à calculer la fonctionnelle :

$$f(\vec{n}_1, ..., \vec{n}_j, ..., \vec{n}_N) = \sum_{k \neq l} R_{kl}$$

avec les coefficients ($R_{kl}$) étant fonction des vecteurs ($\vec{n}_j$) donnant la direction des sources de bruit, et à minimiser la fonctionnelle ($f$), de manière à déterminer les directions ($\vec{n}_j$) des sources de bruit.

EP 1 542 030 A1

## Description

La présente invention se rapporte à la détection et la localisation de sources de bruit au sens général, à l'aide de capteurs appropriés à la nature de la source de bruit.

L'objet de l'invention concerne une méthode de détection et de localisation de sources de bruit disposées dans l'espace à une, deux ou trois dimensions, non corrélées entre elles et présentant des spectres d'émission à bandes étroites ou larges.

L'objet de l'invention trouve des applications particulièrement avantageuses dans le domaine de la localisation de sources de bruit non assorties d'un écho et provenant, par exemple, de véhicules, de navires, d'aéronefs ou d'armes à feu.

Dans de nombreuses applications, il apparaît le besoin de pouvoir localiser, d'une manière relativement précise, une source de bruit afin de prendre les dispositions pour la neutraliser. Il est connu, dans l'état de la technique, de nombreuses solutions permettant de localiser, par voie acoustique, des sources de bruit. Les principales solutions connues font appel aux techniques de corrélation des signaux délivrés par les capteurs de détection.

Ces techniques présentent l'inconvénient d'être particulièrement sensibles aux bruits parasites survenant dans l'environnement des capteurs de mesure. D'autre part, il doit être considéré que ces techniques constituent des méthodes spécifiques adaptées à chaque application considérée.

La technique la plus utilisée exploite des antennes avec un grand nombre de capteurs (quelques centaines) et un système informatique lourd, réalisant une formation de voies permettant une visée dans une direction donnée, de manière à accroître le rapport signal / bruit. Ce procédé ne fait pas d'hypothèse, a priori, sur le nombre de sources et leur éventuelle corrélation, ce qui introduit une perte en résolution.

Il apparaît donc le besoin de pouvoir disposer d'une méthode générale de détection et de localisation de sources de bruit survenant dans l'espace, lorsque le nombre de ces sources de bruit est petit et se trouve connu ou majoré.

L'objet de l'invention vise à satisfaire ce besoin en proposant un procédé de détection et de localisation de sources de bruit à l'aide de capteurs adaptés à la nature de la source de bruit, ce procédé présentant un faible coût de mise en oeuvre.

Pour atteindre cet objectif, le procédé selon l'invention consiste :

- à prélever les signaux électriques temporels délivrés par les capteurs, chaque signal délivré par un capteur étant la somme des signaux émis par les sources de bruit,
- à amplifier et à filtrer les signaux électriques temporels prélevés,
- à numériser les signaux électriques,
- à calculer la fonctionnelle :

$$f(\vec{\boldsymbol{n}}_1,...,\vec{\boldsymbol{n}}_j,...,\vec{\boldsymbol{n}}_N) = \sum_{k \neq l} R_{kl}$$

avec des coefficients **R**$_{kl}$ fonction des vecteurs $\vec{\boldsymbol{n}}_j$ donnant la direction des sources de bruit,
- et à minimiser la fonctionnelle, de manière à déterminer les directions des sources de bruit.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** illustre, de manière schématique, le principe du procédé de détection selon l'invention.
La **fig. 2** est un schéma illustrant un détail caractéristique du procédé selon l'invention.
La **fig. 3** est un schéma illustrant le procédé de localisation de deux sources de bruit à l'aide de deux capteurs.

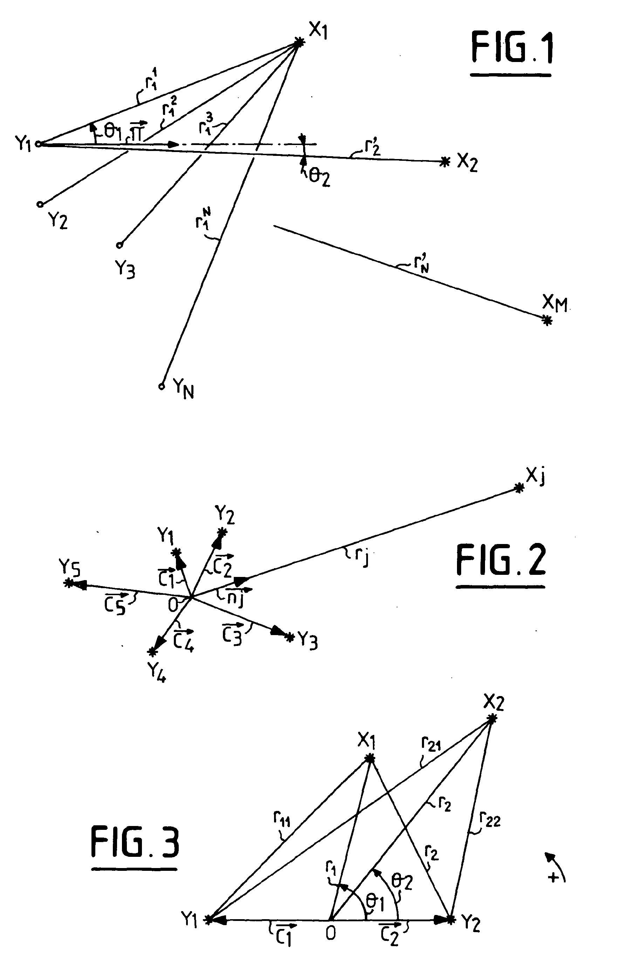

Tel que cela apparaît sur la **fig. 1**, le procédé selon l'invention consiste à localiser des sources de bruit **X**$_1$, **X**$_2$, ..., **X**$_j$, ... **X**$_M$ avec *j* variant de 1 à M, réparties dans l'espace et émettant chacune, respectivement, un signal **S**$_j$, avec *j* variant de 1 à M. Le procédé selon l'invention consiste à localiser les sources de bruit **X**$_j$ à l'aide de capteurs de vibrations ou d'ondes acoustiques **Y**$_1$, **Y**$_2$, ... **Y**$_i$, ... **Y**$_N$, avec i variant de 1 à N, délivrant chacun, respectivement, un signal électrique temporel **s**$_1$, **s**$_2$, ..., **s**$_i$ ... **s**$_N$.

Le procédé consiste à prélever les signaux électriques temporels **s**$_i$**(t)** délivrés par chaque capteur et représentatifs de la somme des signaux **S**$_j$ émis par les sources de bruit **X**$_j$. Les signaux **s**$_i$**(t)** reçus sur les N capteurs s'écrivent à partir de la somme des contributions des différentes sources de la manière suivante :

$$s_i(t) = \sum_{j=1}^{M} A_{ij} S_j\left(t - \frac{r_{ij}}{c}\right)$$

avec $i$ = 1 à N, et $r_{ij}$, la distance de la source de bruit $X_j$ au capteur $Y_i$, et $c$, la célérité du son dans son milieu ambiant.

Le terme $A_{ij}$ traduit l'atténuation due à la propagation ainsi que le facteur de sensibilité des capteurs et s'exprime par :

$$A_{ij} = B_i C (r_{ij})$$

avec $i$ = 1 à N et $j$ = 1 à M, où $B_i$ est le coefficient de sensibilité du capteur $Y_i$ et où $C (r_{ij})$ est le coefficient d'atténuation due à la propagation sur une distance $r_{ij}$.

Les capteurs $Y_i$ sont associés à une unité électronique non représentée, assurant une amplification et un filtrage passe-bande des signaux recueillis. De préférence, les capteurs sont appariés en module et en phase, de sorte que les sensibilités sont identiques. Ainsi, $B_i = G$ pour $i$ = 1 à N.

Avantageusement, pour faciliter la mise en oeuvre de l'antenne de capteurs ainsi définie, les capteurs $Y_i$ sont placés relativement proches les uns des autres. Par conséquent, pour des sources éloignées, la distance $r_{ij}$ est de l'ordre de la distance $r_j$, c'est-à-dire de la distance entre le barycentre des capteurs et la source $X_j$. Ainsi, l'atténuation n'est plus fonction que de la distance $r_j$, avec $C(r_{ij}) = C(r_j)$, avec i = 1 à N et $j$ = 1 à M.

Il peut en être déduit que :

$$A_{ij} = G. C (r_j) a (r_j),$$

avec $i$=1 à N et $j$=1 à M et :

$$s_i(t) = \sum_{j=1}^{M} a (r_j) S_j\left(t - \frac{r_{ij}}{c}\right),$$

avec $i$ = 1 à N.

L'amplitude des sources $X_j$ étant inconnues, il peut être écrit, en intégrant le terme $a(r_j)$ dans $S_j$ :

$$s_i(t) = \sum_{j=1}^{M} S_j\left(t - \frac{r_{ij}}{c}\right),$$

avec $i$ = 1 à N.

L'expression des signaux $s_i(t)$, en utilisant les transformées de Fourier, devient :

$$(1) \quad \hat{s}_i(\omega) = \sum_{j=1}^{M} \hat{S}_j(\omega).e^{-J\omega\frac{r_{ij}}{c}},$$

avec $i = 1$ à $N_A$

où $s$ et $S$ sont les transformées de Fourier de **s** et **S** respectivement et $\omega$ étant la pulsation.

Cette première relation (**1**) lie les signaux reçus aux distances $r_{ij}$, c'est-à-dire aux positions des sources $X_j$.

Tel que cela ressort de la **fig. 2**, il peut être exprimé d'autres relations liées à des considérations géométriques, permettant de relier les distances $r_{ij}$ au vecteur unitaire $\vec{n}_j$, qui détermine la direction définie par le barycentre des capteurs et la source générant le signal $S_j$. La position des capteurs est définie par le vecteur $\vec{c}_i$ construit à partir de la position des capteurs $Y_i$ et de leur barycentre.

Un développement limité à l'ordre 1 de $r_{ij}$ fourni alors :

$$(2) \qquad r_{ij} \approx r_j - <\vec{n}_j, \vec{c}_i>,$$

avec $i = 1$ à N et $j = 1$ à M, où $<., .>$ est le produit scalaire.

Ainsi, en remplaçant $r_{ij}$ par l'expression approchée établie en (2) et en intégrant le terme de phase :

$$e^{-J\omega\frac{r_j}{c}}$$

qui ne dépend que de la source $X_j$ dans la grandeur $\hat{S}_{j(\omega)}$, la relation (1) s'écrit alors :

$$(3) \quad \hat{s}_i(\omega) = \sum_{j=1}^{M} \hat{S}_j(\omega).e^{J\omega\frac{<\vec{n}_j,\vec{c}_i>}{c}},$$

avec $i = 1$ à $N$.

Cette relation peut s'exprimer aussi sous une forme matricielle et vectorielle :

$$(4) \quad \vec{s}(\omega) = \sum_{j=1}^{M} \hat{S}_j(\omega).\vec{T}_j(\omega)$$

avec pour la ième coordonnée du vecteur $T_j$ :

$$(\vec{T}_j)_i = e^{J\omega\frac{<\vec{n}_j,\vec{c}_i>}{c}}$$

avec **i** = **1** à N

Ou encore :

$$(5) \qquad \vec{s}(\omega) = T.\vec{S}(\omega)$$

avec T = matrice de terme général :

$$T_{ij} = e^{-J\omega\frac{<\vec{n}_j,\vec{c}_i>}{c}}$$

Dans le cas où les sources $X_j$ ne sont pas corrélées, il peut être déterminé les signaux $S_j$ à partir des signaux $s_i$ des vecteurs $\vec{n}_j$. Il est ensuite procédé à une minimisation des fonctions d'intercorrélation entre $S_i$ et $S_j$ pour $i \neq j$.

Lorsque l'opération de minimisation a été effectuée, après la détermination les directions $\vec{n}_j$, il est également possible de retrouver les grandeurs $\hat{S}_j$.

En effet, si N = M, c'est-à-dire autant de capteurs que de sources, le système (5) peut, en général, s'inverser.

Si N ≥ M, le problème se ramène à un système carré par une pré-multiplication par :

$$^{t}T^{*}$$

matrice transposée conjuguée de **T**. Le système (5) devient alors :

$$^{t}T^{*}.\,\vec{s}\,(\omega) = \,^{t}T^{*}.T.\,\vec{S}\,(\omega)$$

et alors

$$(6) \qquad \vec{S}\,(\omega) = (^{t}T^{*}.T)^{-1}.\,^{t}T^{*}.\,\vec{s}\,(\omega)$$

Les signaux $\hat{S}$ étant ainsi formellement exprimés, on calcule formellement le coefficient de corrélation $R_{ij}$ entre les sources $i$ et $j$ par :

$$(7) \quad R_{ij} = \frac{\int_{-\infty}^{+\infty} \Gamma_{ij}^2(\tau)d\tau}{\Gamma_{ii}(0).\Gamma_{jj}(0)}, i \neq j$$

où $\Gamma ij$ peut aussi être calculé formellement à partir des grandeurs fréquentielles, on a alors :

$$(8) \quad R_{ij} = \frac{\int_{-\infty}^{+\infty} \left|\hat{S}_i(\omega)\right|^2.\left|\hat{S}_j(\omega)\right|^2 d\omega}{\int_{-\infty}^{+\infty}\left|\hat{S}_i(\omega)\right|^2 d\omega.\int_{-\infty}^{+\infty}\left|\hat{S}_j(\omega)\right|^2 d\omega}$$

La fonction à minimiser est alors :

$$(9) \quad f(\vec{n}_1,...,\vec{n}_j,...,\vec{n}_N) = \sum_{k \neq l} R_{kl}$$

les coefficients $R_{kl}$ étant fonction des vecteurs $\vec{n}_j$.

Dans le cas où les signaux $S_i$, $S_j$ sont reçus avec des amplitudes comparables, les dénominateurs de $R_{ij}$ sont de même ordre de grandeur et peuvent donc être remplacés par 1 sans altérer la position des minimas. Le calcul des $\Gamma_{ij}$ peut alors avantageusement être réalisé dans le domaine temporel, lorsque l'intervalle de variation des retards possibles est faible.

Lorsque les directions définies par les vecteurs $\vec{n}_j$ sont déterminées, il est possible aussi de retrouver les grandeurs $S_j$ à partir de la relation (6). Une telle technique permet ainsi de caractériser la nature des sources $X_j$.

La description qui suit, en référence à la **fig. 3,** donne un exemple de réalisation de la détection et de la localisation de deux sources de bruit $X_1$, $X_2$ non corrélées (M = 2), à l'aide de deux capteurs $Y_1$, $Y_2$ (N = 2).

Dans le domaine fréquentiel, les signaux électriques $s_1$, $s_2$ délivrés respectivement par les capteurs $Y_1$, $Y_2$ et représentatifs de la somme des signaux $S_1$, $S_2$ émis par les sources de bruit $X_1$, $X_2$, s'expriment par :

$$\begin{cases} \hat{s}_1(\omega) = e^{-J\omega\tau_{11}}\hat{S}_1(\omega) + e^{-J\omega\tau_{21}}\hat{S}_2(\omega) \\ \hat{s}_2(\omega) = e^{-J\omega\tau_{12}}\hat{S}_1(\omega) + e^{-J\omega\tau_{22}}\hat{S}_2(\omega) \end{cases}$$

où

$$\tau_{ij} = \frac{r_{ij}}{c}$$

est le retard de propagation du signal émis par la source i pour atteindre le capteur j.

L'inversion de ce système conduit à :

$$\begin{cases} \hat{S}_1(\omega) &= \dfrac{\hat{s}_1(\omega)\,e^{-J\omega\tau_{22}} - \hat{s}_2(\omega)\,e^{-J\omega\tau_{21}}}{e^{-J\omega(\tau_{11}+\tau_{22})} - e^{-J\omega(\tau_{12}+\tau_{21})}} \\[4mm] \hat{S}_2(\omega) &= \dfrac{\hat{s}_2(\omega)\,e^{-J\omega\tau_{11}} - \hat{s}_1(\omega)\,e^{-J\omega\tau_{12}}}{e^{-J\omega(\tau_{11}+\tau_{22})} - e^{-J\omega(\tau_{12}+\tau_{21})}} \end{cases}$$

La fonction d'intercorrélation entre les signaux sources $S_1$ et $S_2$ s'écrit :

$$\Gamma_{12}(\tau) = \int_{-\infty}^{+\infty} \hat{S}_1(\omega).\hat{S}_2(\omega)e^{J\omega\tau}\,d\omega$$

par le retard $\tau$.

En remplaçant $\hat{S}_1(\omega)$ et $\hat{S}_2(\omega)$ par leurs valeurs, il vient :

$$\Gamma_{12}(\tau) = \int_{-\infty}^{+\infty} \frac{N(\omega)}{|D(\omega)|^2}\,d\omega$$

où

$$N(\omega) = \begin{bmatrix} -|\hat{s}_1(\omega)|^2 e^{J\omega(\tau_{12}-\tau_{22})} -|\hat{s}_2(\omega)|^2 e^{J\omega(\tau_{11}-\tau_{21})} + \hat{s}_1(\omega)\hat{s}_2^*(\omega)e^{J\omega(\tau_{11}-\tau_{22})} \\ + \hat{s}_1^*(\omega)\hat{s}_2^*(\omega)e^{J\omega(\tau_{12}-\tau_{21})} \end{bmatrix}.e^{J\omega\tau}$$

et

$$|D(\omega)|^2 = 4\sin^2\frac{\omega}{2}(\tau_{11}+\tau_{22}-\tau_{12}-\tau_{21})$$

Une solution simple (mais sous-optimale) consiste ici à ne considérer que l'optimisation du numérateur N.

L'intercorrélation $\Gamma_{12}$ peut alors être approchée par :

$$\Gamma_{12}(\tau) \approx \int_{-\infty}^{+\infty} N(\omega)d\omega$$

En remplaçant **N($\omega$)** par sa valeur, on obtient alors une expression qui n'est plus fonction que des $\gamma_{ij}$, auto-corrélations et intercorrélations entre les signaux mesurés $s_i$ et $s_j$ :

$$\Gamma_{12}(\tau) \cong -\gamma_{11} (\tau + \tau_{12} - \tau_{22}) - \gamma_{22} (\tau + \tau_{11} - \tau_{21}) + \gamma_{21} (\tau + \tau_{12} - \tau_{21})$$

On rappelle que la distance $r_{ij}$ peut être approchée par :

$$r_{ij} \cong r_j - < \vec{n}_j , \vec{C}_i >,$$

En remplaçant $r_{ij}$ par cette expression approchée et en intégrant le terme de phase

$$e^{-J\omega \frac{r_j}{c}}$$

dans $\overset{\wedge}{S}_j (\omega)$ , on aboutit finalement à une expression de l'estimateur de $\Gamma_{12}$ qui est la suivante :

$$\begin{aligned}
\Gamma_{12}(\tau) \approx &-\gamma_{11}\left(\tau - \frac{<\vec{n}_2,\vec{c}_1>}{c} + \frac{<\vec{n}_2,\vec{c}_2>}{c}\right) \\
&-\gamma_{22}\left(\tau - \frac{<\vec{n}_1,\vec{c}_1>}{c} + \frac{<\vec{n}_1,\vec{c}_2>}{c}\right) \\
&+\gamma_{12}\left(\tau - \frac{<\vec{n}_1,\vec{c}_1>}{c} + \frac{<\vec{n}_2,\vec{c}_2>}{c}\right) \\
&+\gamma_{21}\left(\tau - \frac{<\vec{n}_2,\vec{c}_1>}{c} + \frac{<\vec{n}_1,\vec{c}_2>}{c}\right)
\end{aligned}$$

avec $\vec{n}_j$ = vecteur unitaire de **(OX$_i$)** avec **i** = 1,2.
Or:

$$< \vec{n}_1,\vec{c}_1 > = -\frac{D}{2}\cos\theta_1$$

$$< \vec{n}_1,\vec{c}_2 > = \frac{D}{2}\cos\theta_1$$

$$< \vec{n}_2,\vec{c}_1 > = -\frac{D}{2}\cos\theta_2$$

$$< \vec{n}_2,\vec{c}_2 > = \frac{D}{2}\cos\theta_2$$

avec **D** = distance inter capteurs.
Il vient donc :

$$\Gamma_{12}(\tau) \approx -\gamma_{11}\left(\tau + \frac{D}{c} \cos \theta_2\right)$$

$$-\gamma_{22}\left(\tau + \frac{D}{c} \cos \theta_1\right)$$

$$+\gamma_{12}\left(\tau + \frac{D}{2c} (\cos \theta_1 + \cos \theta_2)\right)$$

$$+\gamma_{21}\left(\tau + \frac{D}{2c} (\cos \theta_1 + \cos \theta_2)\right)$$

La fonctionnelle à minimiser par rapport à $(\theta_1, \theta_2)$ est donc :

$$R_{12} = \int_{-\infty}^{+\infty} \Gamma_{12}^2(\tau)\,d\tau$$

L'ambiguïté du signe de $\theta_1$ et de $\theta_2$ est levée en analysant le demi-plan contenant les sources et supposé connu a priori.

L'invention n'est pas limitée aux exemples décrits et représentés, car diverses modifications peuvent y être apportées sans sortir de son cadre.

**Revendications**

1.   Procédé de détection et de localisation de sources de bruit **(X_j)** émettant chacune respectivement des signaux **(S_j)** avec *j*=1 à M, la détection étant assurée à l'aide de capteurs de vibrations ou d'ondes acoustiques **(Y_j)** délivrant chacun, respectivement, un signal électrique temporel **(s_i)** avec *i* variant de 1 à N, **caractérisé en ce qu'**il consiste :

   -   à prélever les signaux électriques temporels délivrés par les capteurs **(Y_i)**, chaque signal **s_i(t)** délivré par un capteur étant la somme des signaux **(S_j)** émis par les sources de bruit **(X_j)**,
   -   à amplifier et à filtrer les signaux électriques temporels prélevés,
   -   à numériser les signaux électriques,
   -   à calculer la fonctionnelle :

$$f(\vec{n}_1, ..., \vec{n}_j, ..., \vec{n}_N) = \sum_{k \neq l} R_{kl}$$

   avec les coefficients **(R_{kl})** étant fonction des vecteurs **(_j)** donnant la direction des sources de bruit **(X_j)**,
   -   et à minimiser la fonctionnelle **(f)**, de manière à déterminer les directions **($\vec{n}_j$)** des sources de bruit **(X_j)**.

2.   Procédé selon la revendication 1, **caractérisé en ce qu'**il consiste, pour minimiser la fonctionnelle **(f)** :

   -   à calculer les transformées de Fourier des signaux **s_i(t)** délivrés par les capteurs,
   -   à calculer formellement les coefficients **(R_{ij})** :

$$R_{ij} = \frac{\int_{-\infty}^{+\infty} \left|\hat{S}_i(\omega)\right|^2 \cdot \left|\hat{S}_j(\omega)\right|^2 d\omega}{\int_{-\infty}^{+\infty} \left|\hat{S}_i(\omega)\right|^2 d\omega \cdot \int_{-\infty}^{+\infty} \left|\hat{S}_j(\omega)\right|^2 d\omega}$$

- et à minimiser la fonctionnelle (*f*) pour déterminer les directions ($\vec{\mathbf{n}}_j$) des sources de bruit (**X**$_j$) sélectionnées.

3. Procédé de détection selon la revendication 1, **caractérisé en ce qu'**il consiste, pour minimiser la fonctionnelle (*f*) :

- à calculer formellement le coefficient de corrélation (**R**$_{ij}$) :

$$R_{ij} = \frac{\int_{-\infty}^{+\infty} \Gamma_{ij}^2(\tau)d\tau}{\Gamma_{ii}(0).\Gamma_{jj}(0)}$$

où ($\Gamma_{ij}$) est la fonction d'intercorrélation entre les signaux (**S**$_i$), (**S**$_j$).

4. Procédé de détection selon la revendication 1, **caractérisé en ce qu'**il consiste, après l'opération de minimisation, à calculer le vecteur source :

$$\vec{S}(\omega) = ({}^t T^*.T)^{-1}.{}^t T^*.\vec{s}(\omega)$$

afin de retrouver les caractéristiques des sources de bruit **(X$_j$).**

FIG.1

FIG.2

FIG.3

**EP 1 542 030 A1**

| | Office européen | | |
|---|---|---|---|
| | des brevets | **RAPPORT DE RECHERCHE EUROPEENNE** | Numéro de la demande<br>EP 03 35 6199 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 2003/063029 A1 (FERREOL ANNE ET AL)<br>3 avril 2003 (2003-04-03)<br>* alinéa [0059]; figure 1 *<br>----- | 1 | G01S3/80<br>G01S3/74 |
| A | US H 374 H (ANAS ABO-ZENA)<br>3 novembre 1987 (1987-11-03)<br>* colonnes 3-4 *<br>----- | 1-4 | |
| A | US 4 965 732 A (ROY III RICHARD H ET AL)<br>23 octobre 1990 (1990-10-23)<br>----- | 1-4 | |
| A | SCHMIDT R O: "MULTIPLE EMITTER LOCATION AND SIGNAL PARAMETER ESTIMATION"<br>IEEE TRANSACTIONS ON ANTENNAS AND PROPAGATION, IEEE INC. NEW YORK, US,<br>vol. AP-34, no. 3,<br>1 mars 1986 (1986-03-01), pages 276-280,<br>XP000644956<br>ISSN: 0018-926X<br>* le document en entier *<br>----- | 1-4 | |

| DOMAINES TECHNIQUES RECHERCHES (Int.Cl.7) |
|---|
| G01S |

Le présent rapport a été établi pour toutes les revendications

| Lieu de la recherche | Date d'achèvement de la recherche | Examinateur |
|---|---|---|
| La Haye | 24 mai 2004 | Kern, O |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 03 35 6199

La présente annexe indique les membres de la  famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre  indicatif et n'engagent pas la responsabilité  de l'Office européen des brevets.

24-05-2004

| Document brevet cité au rapport de recherche | | Date de publication | Membre(s) de la famille de brevet(s) | | Date de publication |
|---|---|---|---|---|---|
| US 2003063029 | A1 | 03-04-2003 | FR<br>AU<br>CA<br>EP<br>WO | 2805614 A1<br>3748801 A<br>2400763 A1<br>1259833 A1<br>0165272 A1 | 31-08-2001<br>12-09-2001<br>07-09-2001<br>27-11-2002<br>07-09-2001 |
| US H374 | H | 03-11-1987 | AUCUN | | |
| US 4965732 | A | 23-10-1990 | US | 4750147 A | 07-06-1988 |

EPO FORM P0460

Pour tout renseignement concernant cette annexe :  voir Journal Officiel de l'Office européen des  brevets, No.12/82